# EUROPEAN PATENT APPLICATION

(11) **EP 2 625 995 A1**
(43) Date of publication of application: **14.08.2013**
(21) Application number: 12155168.3
(22) Date of filing: 13.02.2012
(51) Int. Cl.: A47L 11/16, A47L 11/38, A47L 11/40

(54) **Device for cleaning surfaces and the like**

(71) Applicant: E.M.M.P. S.r.l., 48022 Lugo (Ravenna) (IT)
(72) Inventor: Brusa, Alessio, 48022 Lugo (Ravenna) (IT)
(74) Representative: Fuochi, Riccardo

(57) **Abstract**

A device (1) for cleaning surfaces and the like comprises a support framework (2) for rotatably supporting at least one brush element (3) provided with a core (31) and a plurality of bristles (4) inserted into the core (31), a hydraulic motor (6) fixed to the support framework (2) for rotating the at least one brush element (3) through transmission means (7, 8, 9), a cowl (12) fixed to the support framework (2) for conveying and holding the cleaning water around the at least one brush element (3), characterised in that said at least one brush element (3) is the support on which the device (1) rests during cleaning.

## Description

### TECHNICAL FIELD OF THE INVENTION.

The present invention regards a device for cleaning surfaces and the like, such as flat, inclined or curved surfaces, part of buildings, roof surfaces, glass surfaces, and in particular photovoltaic and solar panels.

### STATE OF THE PRIOR ART

Various cleaning devices are known in the surface cleaning industry. From document US-5959424 is known such type of device which has a support framework with wheels adjustable in height, cleaning bristles actuated by an electric motor, drums with cables for the movement of the cleaning device, a pneumatic system for determining and correcting the lateral deviation and rotation of the cleaning device, a microprocessor for controlling the device itself.

From document EP-2258490A2 is known another cleaning device comprising at least two brushes rotating in the same direction, or counter-rotating, associated to a framework with support wheels, a volumetric motor for the actuation of the brushes, for example a motor with axial pistons, directly actuated by the cleaning liquid and conduits for distributing the liquid exiting from the motor towards the brushes.

Other types of devices for cleaning surfaces are known from documents GB-158319A and JP-51/007962U.

All cleaning devices of the known type are relatively complex and heavy and require support means, or extensive surfaces of the brushes in contact with the surface to be cleaned, and also pressure rollers for efficiently supporting the entire cleaning device.

### OBJECTS OF THE INVENTION.

An object of the present invention is to improve the state of the art.

Another object of the present invention is to provide a device for cleaning surfaces that is efficient at cleaning and inexpensive in terms of production and maintenance.

Another object of the present invention is to provide a device for cleaning surfaces that is light and made up by a minimum number of parts.

According to an aspect of the invention a device for cleaning surfaces according to the independent claim 1 is provided.

The dependent Claims refer to preferred and advantageous embodiments of the invention.

### BRIEF DESCRIPTION OF THE DRAWINGS.

Further characteristics and advantages of the invention shall be clearer from the description of an embodiment of a device for cleaning surfaces, illustrated by way of example in the attached drawings wherein:
figure 1 illustrates a perspective view of the device for cleaning surfaces according to the present invention;
figure 2 illustrates another perspective view with some parts removed for better exposing other parts of the device for cleaning surfaces according to figure 1;
figure 3 illustrates an exploded view of a detail of the device for cleaning surfaces according to the previous figures;
figure 4 illustrates still another perspective view with some parts removed for better exposing other parts of the device for cleaning surfaces according to the previous figures;
figures 5 and 6 illustrate other enlarged details of the device for cleaning surfaces according to the previous figures.

### EMBODIMENTS OF THE INVENTION.

With reference to the attached figures, a device for cleaning surfaces according to the present invention is indicated in its entirety with 1.

The cleaning device 1 essentially comprises a support framework 2 for rotatably supporting two brush elements 3. The indication of the brush elements 3 at two is solely for exemplificative purposes and it should be considered that these brush elements 3 may vary numerically starting from a single brush element 3.

The brush elements 3 in turn comprise a rigid core on which a plurality of bristles 4, which also serve for supporting the entire cleaning device 1, are inserted.

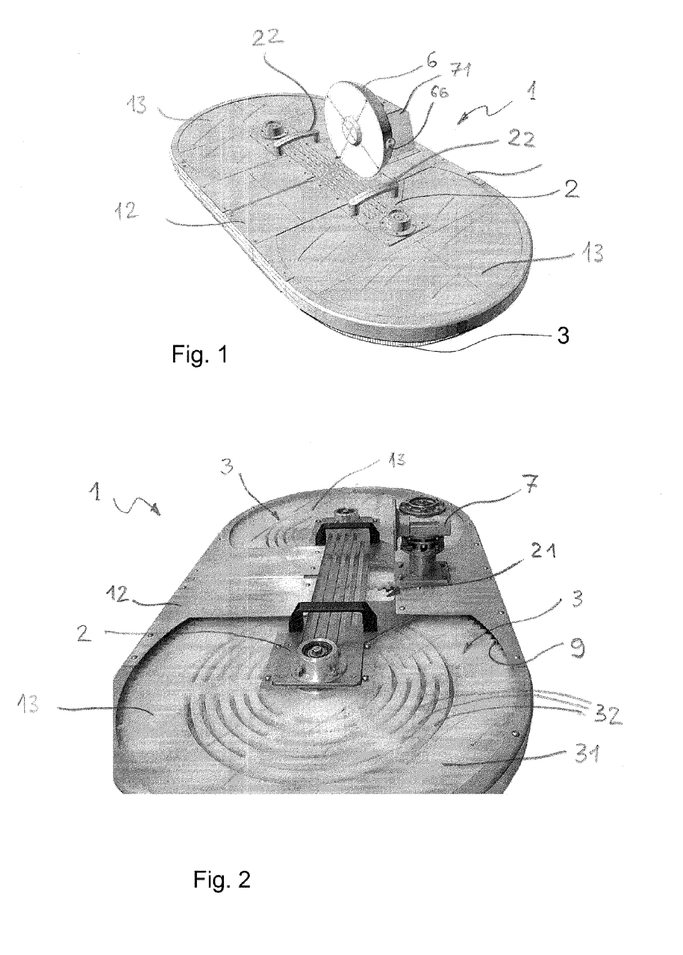

In the embodiment illustrated in the figures the rigid core is represented by a disc 31, which can be provided with lightening openings 32 for reducing the weight of the disc 31 (figures 2, 5 and 6).

The cleaning device 1 further comprises transmission means 5 and a hydraulic motor 6, provided with a drive shaft 61. The hydraulic motor 6 rotates the brush elements 3 through the aforementioned transmission means 5.

In detail, the transmission means 5 comprise a speed reducer 7 coupled to the shaft 61 of the hydraulic motor 6 and in succession a further reduction comprising at least one pair of gears constituted for example by a pinion 8 and a toothed crown 9.

By way of non-limiting example, the speed reducer 7 is of the type with perpendicular axes and it has a speed reduction ratio of 1 to 10, and the further reduction is constituted by cylindrical toothed wheels also having a speed reduction ratio of 1 to 10. Thus, still by way of non-limiting example, the overall reduction of the speed, starting from the motor 6 towards the brush elements 3, is of about 1 to 100.

The speed reducer 7 being of the type with perpendicular axes can be obtained with different types of toothed wheels, for example it can be of the worm screw type and helical wheel, or with conical wheels, or with cylindrical wheels with helical teeth and non-incident perpendicular axes, etcetera.

The speed reducer 7 is further protected by a cover 71 fixed to the framework 2.

The brush elements 3 are kinematically connected to each other and to the toothed crown 9, so that they all rotate at the same angular speed as the toothed crown 9.

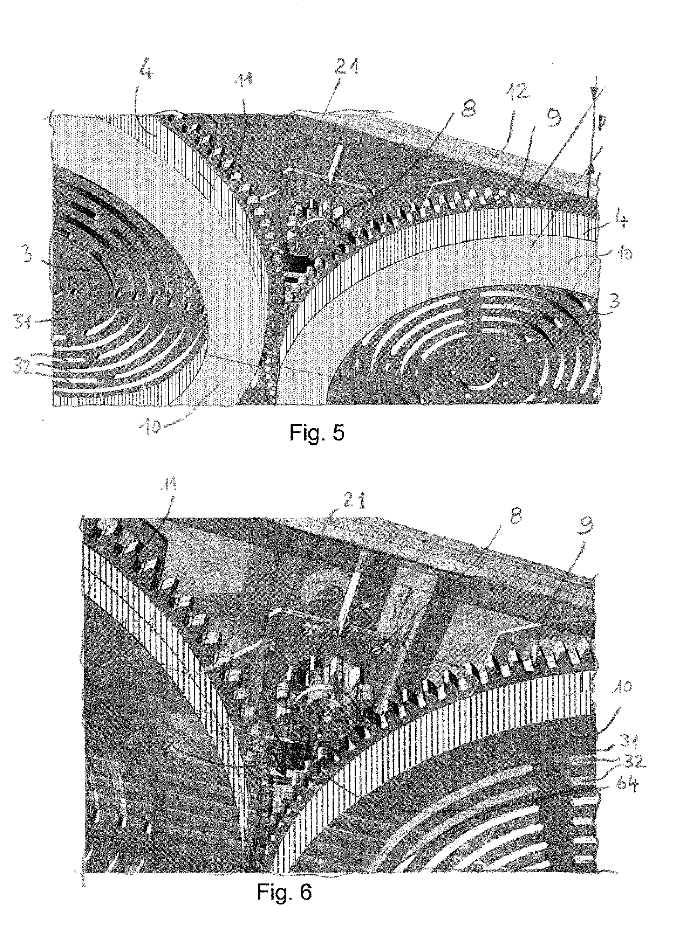

In the embodiment illustrated in the figures, the brush elements 3 comprise the disc 31 with the bristles 4 arranged perpendicularly to a face of the disc 31 on a circular crown 10 (figures 5 and 6).

As previously mentioned, the bristles 4 are in a number and have mechanical characteristics such to allow completely supporting the cleaning device 1, without the need of further support means such as wheels or slides. In addition, the toothed crown 9 is directly formed in the disc 31 of one of the brush elements 3 and a further toothed crown 11 for the other or more toothed crowns for the other brush elements is provided.

The toothed crowns 9 and 11 can be directly meshed to each other, according to what is illustrated in figures 5 and 6, thus in this case the brush elements 3 rotate in opposite direction.

Obviously, the transmission with toothed cylindrical wheels is provided solely for exemplifying purposes, and any type of transmission to obtain an opposite rotation of the discs of the brush elements 3 can be used, for example friction wheels, belts or crossed chains, etcetera.

In another not illustrated version of the present invention, each toothed crown may be meshed to the pinion 8, or according to a further not illustrated version of the present invention, the brush elements 3 are connected to each other through transmission means that allow a matching rotation of the brush elements 3, for example the belts or ring chains, thus in all the latter cases the brush elements 3 rotate in matching direction.

It should be observed that friction forces that develop between the surface to be cleaned and the bristles 4 of the brush elements 3 are more balanced if the brush elements 3 are numerically even and rotate in opposite direction in pairs.

However, the presence of water, and possible detergents, considerably reduces the coefficient of friction between the surface to be cleaned and the bristles 4, hence the cleaning device 1, also with the brush elements 3 in odd number, or with two or more brush elements 3 rotating in the same direction, is sufficiently stable and free of deviations.

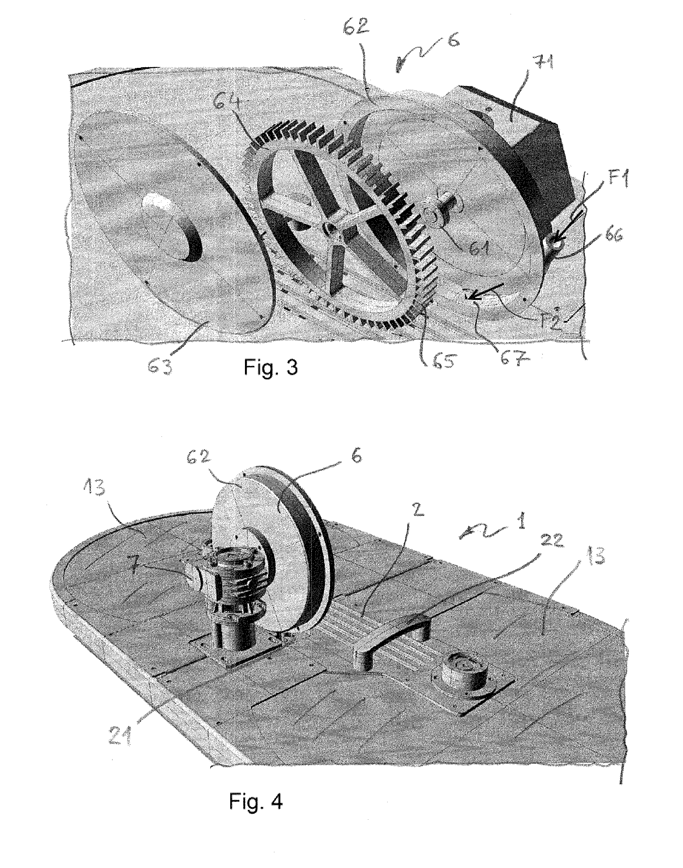

The hydraulic motor 6, illustrated more in detail in figure 3, is of the type with rotor having a dynamic pulse and comprises a shell 62 which is substantially shaped to form a cylindrical cup with a closing cover 63. The hydraulic motor having a dynamic pulse rotor is lighter and less expensive with respect to other types of hydraulic motors.

The shell 62 further comprises an inlet port 66 for a pressurised water jet, for example coming from a high pressure power washer, also referred to as high pressure washers (not illustrated), and an outlet port 67. The entry of the water is indicated with an arrow F1, while the exit of the water is indicated with an arrow F2 (figures 3 and 6).

It should be observed that even though water is explicitly indicated as the cleaning liquid, in the device 1 according to the present invention any type of liquid, mixture of liquids and liquid or powders detergents compatible and suitable for the materials of the surfaces to be cleaned can be used.

Within the shell 62 there is a rotor 64 connected to the aforementioned drive shaft 61, in turn the rotor 64 comprises a series of blades 65 which serve for transforming the dynamic pulse of the incoming water jet into a rotation of the rotor 64 and thus of the drive shaft 61.

In practice, the speed of the water jet coming from the inlet port 66, and thus the kinetic energy thereof is exploited, to obtain the rotation of the rotor 64.

It should be observed that the outlet port 67 of the motor 6 is suitably oriented towards an opening 21 of the framework 2, and in turn the opening 21 is suitably positioned in proximity of the periphery of the discs 31 of the brush elements 3.

The surface cleaning water jet exiting from the outlet port 67 is sent, through the opening 21 of the framework 2, to the periphery of the discs of the brush elements 3, and thus distributed on the entire surface of the brush elements 3.

This configuration allows completely avoiding the use of pipes for conveying the water exiting from the motor 6 towards the brush elements 3, making the construction of the device 1 lighter and less expensive with respect to the cleaning devices of the known type.

In a version of the present invention, the blades 65 are constructed as flat blades, given that they are easy to make through simple machining, for example through electro-erosion, or through mechanical machining using machine tools. Furthermore, the rotor 64 can also be easily obtained by casting.

The blades 65 are angularly spaced from each other so that each blade 65 is impacted by the water jet coming from the inlet port 66 without interference from the adjacent blades.

In practice, the rotor 64 and the relative blades 65 are a compromise between the simplicity and the low cost of manufacture and the performance provided by the kinetic energy of the water jet and the power supplied to the drive shaft 61.

In any case, the presence of the speed reducer 7 and the subsequent reduction provided by the pinion 8 and by the toothed crown 9, or by analogous means, allow increasing the torque provided by the motor 6 up to a level sufficient to allow an efficient rotation of the brush elements 3.

It should be also observed that the motor 6, and in particular the rotor 64 and the inlet 66 and exit 67 ports, are dimensioned so as to use only part of the energy which has the inflowing water jet, hence the outflowing water jet still maintains a residue pressure useful for distributing water on the brush elements 3 and on the surface to be washed.

The cleaning device 1 further comprises a cowl 12 which is fixed to the framework 2 and covers and encloses at least one part of the lateral surface of the brush elements 3.

It should be observed that the cowl 12 solely serves for conveying and holding the cleaning water around the brush elements 3 and it does not serve as a support element of the device 1, given that this function is already carried out by the bristles 4 of the brush elements 3.

Thus, during use, the cowl 12 does not rest on the surface to be cleaned, but it has a side edge which is at a higher level than a predefined value "D" with respect to the support ends of the bristles 4 (figure 5).

Thus, the side edge of the cowl 12 defines a perimeter passage which allows an easy exit of the water after the cleaning of the surface in the area of the brush elements 3.

Given that it does not have a structural support function, the construction of the cowl 12 is also very light. The cowl 12 further comprises transparent windows 13 for inspecting and surveying the brush elements 3.

The framework 2 is provided with handles 22 for a comfortable transport and use of the device 1, this also being facilitated by the low overall weight of the device 1.

Actually, the entire device 1 is made using light material such as aluminium and plastic material. In particular and solely by way of example, it is indicated that the framework 2, the cowl 12, the hydraulic motor 6 and the box of the speed reducer 7 are made of aluminium, the windows 13 of the cowl 12 are made of transparent plastic material, for example polycarbonate or polymethylmethacrylate, also referred to as Plexiglas ®, and the disc 31 of the brush elements 3 is made of acetal resin, also referred to as Delrin ®.

Due to the overall construction simplicity and lightness of the device 1 according to the present invention, the aforementioned cleaning device 1 does not need supports, wheels or slides, due to the fact that it can be efficiently supported by the bristles 4 of the brush elements 3.

Albeit the aforementioned construction simplicity the device 1 according to the present invention is capable of efficiently cleaning all types of surfaces.

Furthermore, being particularly light it can also be used on glasses and similar surfaces that may not be capable of supporting heavier cleaning devices.

The present invention thus conceived can be subjected to numerous modifications and variants all falling within the inventive concept.

Furthermore, all details can be replaced by other technically equivalent elements. In practice, the materials used, as well as the shapes and contingent dimensions, may vary depending on the requirements without departing from the scope of protection of the claims that follow. In the cases where the technical characteristics mentioned in the claims are followed by reference numbers, such reference numbers are introduced with the sole aim of increasing the clarity of the claims and hence the aforementioned reference numbers do not have a limiting effect on the interpretation of each element identified as an example by such reference numbers.

## Claims

1. Device (1) for cleaning surfaces and the like, comprising a support framework (2) for rotatably supporting at least one brush element (3) provided with a core (31) and a plurality of bristles (4) inserted into the core (31), a hydraulic motor (6) fixed to the support framework (2) for rotating the at least one brush element (3) through transmission means (7, 8, 9), a cowl (12) fixed to the support framework (2) for conveying and holding the cleaning water around the at least one brush element (3), **characterised in that** said at least one brush element (3) is the support on which the device (1) rests during the cleaning.

2. Device (1) for cleaning surfaces according to claim 1, wherein the hydraulic motor (6) comprises a shell (62), a rotor (64) arranged within the shell (62), and a drive shaft (61), the rotor (64) being connected to the drive shaft (61) and comprising a series of blades (65) which serve for transforming the kinetic energy of the inflowing water jet into a rotation of the rotor (64).

3. Device (1) for cleaning surfaces according to claim 1 or 2, wherein the hydraulic motor (6) comprises an inlet port (66) for a pressurised water jet, for example coming from a high pressure power washer, and an outlet port (67), the outlet port (67) being oriented towards an opening (21) of the framework (2), the opening (21) being positioned in proximity of the periphery of the at least one brush-like element (3).

4. Device (1) for cleaning surfaces according to any one of the preceding claims, comprising two brush elements (3) rotating in opposite direction.

5. Device (1) for cleaning surfaces according to claim 4, wherein the two brush elements (3) each comprise a toothed crown (9, 11), the toothed crowns (9, 11) being directly meshed to each other so as to rotate in opposite direction.

6. Device (1) for cleaning surfaces according to any one of the preceding claims, wherein the transmission means comprise a speed reducer (7) with perpendicular axes, the speed reducer (7) being coupled in input to the shaft (61) of the hydraulic motor (6).

7. Device (1) for cleaning surfaces according to claim 6, when this depends on claim 5, wherein the transmission means comprise a pinion (8) coupled in output to the speed reducer (7), the pinion (8) being in turn meshed with the toothed crowns (9) of the brush elements (3).

8. Device (1) for cleaning surfaces according to any one of the preceding claims, wherein the at least one brush element (3) comprises bristles (4) in a number and with mechanical characteristics such to allow completely supporting the cleaning device (1) without the need of further support means such as wheels or slides.

9. Device (1) for cleaning surfaces according to any one of the preceding claims, wherein the cowl (12) has a side edge which is at a higher level than a predefined value (D) with respect to the support end of the bristles (4) of the at least one brush element (3), so as to define a perimeter passage which allows the exit of the water after cleaning the surface.

10. Device (1) for cleaning surfaces according to any one of the preceding claims, wherein the cowl (12) is made of aluminium.

11. Device (1) for cleaning surfaces according to any one of the preceding claims, wherein the cowl (12) comprises transparent windows (13) for inspecting and surveying the brush elements (3).

12. Device (1) for cleaning surfaces according to claim 11, wherein the windows (13) of the cowl (12) are made of transparent plastic material, for example polycarbonate or polymethylmethacrylate.

13. Device (1) for cleaning surfaces according to any one of the preceding claims, wherein the core of the at least one brush element (3) is disc-shaped (31) with lightening openings (32) for reducing the weight of the disc (31).

14. Device (1) for cleaning surfaces according to any one of the preceding claims, wherein the framework (2), the hydraulic motor (6) and the box of the speed reducer (7) are made of aluminium.

15. Device (1) for cleaning surfaces according to any one of the preceding claims, wherein the core (31) of the at least one brush element (3) is made of acetal resin.
